# EUROPEAN PATENT SPECIFICATION

(11) **EP 3 051 096 B1**
(45) Date of publication and mention of the grant of the patent: **27.06.2018**
(21) Application number: 14848351.4
(22) Date of filing: 24.09.2014
(51) Int. Cl.: F02B 29/04, F28F 17/00, F28D 21/00

(54) **INTAKE GAS COOLING DEVICE FOR SUPERCHARGED INTERNAL COMBUSTION ENGINE**
EINLASSGASKÜHLVORRICHTUNG FÜR EINE AUFGELADENE BRENNKRAFTMASCHINE
DISPOSITIF DE REFROIDISSEMENT DE GAZ D'ADMISSION POUR MOTEUR À COMBUSTION INTERNE SURALIMENTÉ

(30) Priority: 24.09.2013 JP 2013196768
(43) Date of publication of application: 03.08.2016
(73) Proprietor: TOYOTA JIDOSHA KABUSHIKI KAISHA, Toyota-shi, Aichi-ken 471-8571 (JP); Denso Corporation, Kariya-shi, Aichi-ken 448-8661 (JP)
(72) Inventor: YOKOI, Tomoya, Toyota-shi, Aichi-ken, 471-8571 (JP); MASUDA, Koichi, Toyota-shi, Aichi-ken, 471-8571 (JP); SHIMPO, Yoshikazu, Toyota-shi, Aichi-ken, 471-8571 (JP); OZAWA, Ikuo, Kariya-shi Aichi 448-8661 (JP); MATSUBARA, Toshirou, Kariya-shi Aichi 448-8661 (JP); KATA, Yoshihito, Kariya-shi Aichi 448-8661 (JP)
(74) Representative: Winter, Brandl, Fürniss, Hübner, Röss, Kaiser, Polte - Partnerschaft mbB
(86) International application number: PCT/JP2014/075155
(87) International publication number: WO 2015/046182

(56) References cited:
- DE-A1- 3 601 391
- FR-A1- 2 908 505
- FR-A1- 2 922 962
- JP-A- 2005 226 476
- JP-A- 2012 102 667
- JP-A- 2012 102 667
- JP-A- 2012 140 868
- JP-A- 2013 164 006
- JP-A- 2014 169 632
- JP-B1- S4 918 843
- JP-U- S57 152 428

## Description

### TECHNICAL FIELD

The invention relates to an intake gas cooling device for a supercharging internal combustion engine, and more particularly, to a condensed water drainage structure of the intake gas cooling device.

### BACKGROUND ART

Patent Document 1 discloses a structure in which an accumulation portion for the condensed water produced in intake gas is set in an intercooler tank and the condensed water is temporarily accumulated therein, as a conventional intake gas cooling device for a supercharging internal combustion engine. Besides, Patent Document 1 discloses a drain that is set at a lower end of the accumulation portion for condensed water.

Patent Document 2 discloses a vacuum pipeline that utilizes an intake manifold negative pressure, as means for sucking the condensed water and oil in an intercooler tank into an internal combustion engine.

### Related Art Documents

### Patent Documents

Patent Document 1: Japanese Patent Application Publication No. 2012-117455 (JP 2012-117455 A)
Patent Document 2: Japanese Patent Application Publication No. 2012-102667 (JP 2012-102667 A)
Document FR 2 922 962 A1 discloses a cooling device having the features of the preamble of claim 1.

### SUMMARY OF THE INVENTION

### Problems to Be Solved by the Invention

However, the conventional intake gas cooling device for the supercharging internal combustion engine has the following problems.

The accumulation portion is not set as a chamber separate from the flow of intake gas. Therefore, the condensed water accumulated in the accumulation portion is taken away in large quantity at once due to the flow velocity of the intake gas flowing in an intercooler, and the internal combustion engine may malfunction (fail to operate properly). In particular, the water frozen at a core portion of the intercooler while running in cold climate may dissolve to be accumulated in the intercooler when the internal combustion engine is stopped, may be taken away by the flow of intake gas to be sucked into the internal combustion engine when the engine is started, and the internal combustion engine may suffer a malfunction such as liquid compression, rough idling, the generation of abnormal noise or the like. Besides, in the case of the drain, regular maintenance work is required.

Besides, with vehicles having small engine displacement, the negative pressure is insufficient in a low rotational speed range, and there are some cases where the condensed water cannot be sucked into the vacuum pipeline that utilizes an intake manifold negative pressure. Besides, the vacuum pipeline is required to extend from the intercooler tank to an intake manifold.

It is an object of the invention to provide an intake gas cooling device for a supercharging internal combustion engine in which the condensed water in an intercooler is restrained or prevented from being sucked into the internal combustion engine in large quantity at once.

### Means for Solving the Problems

An intake gas cooling device for a supercharging internal combustion engine that achieves the aforementioned object can adopt the following first to eleventh configurations. The first to eleventh configurations are applicable to any one of first to fourth embodiments of the invention that will be described later.

The first embodiment of the invention can adopt the following twelfth and thirteenth configurations. The second embodiment of the invention can adopt the following fourteenth configuration. The third embodiment of the invention can adopt the following fifteenth to seventeenth configurations. The fourth embodiment of the invention can adopt the following eighteenth configuration.

In the first configuration of the invention, an intake gas cooling device for a supercharging internal combustion engine is equipped with an intercooler in an intake gas passage. The intercooler has a low temperature-side tank. An outlet pipe is connected to the low temperature-side tank. A reservoir that temporarily accumulates condensed water is provided in a lower portion of the low temperature-side tank.

A water suction pipe that extends from a bottom portion of the reservoir to such a position as to open into the outlet pipe is provided.

The water suction pipe may be entirely or partially configured as a hose.

In the second configuration of the invention, the aforementioned first configuration is modified as follows. That is, an opening of the water suction pipe into the outlet pipe is located upstream of a throttle valve in a flow direction of intake gas.

In the third configuration of the invention, the aforementioned first or second configuration is modified as follows. That is, the opening of the water suction pipe into the outlet pipe is oriented in a direction perpendicular to the flow direction of intake gas or in a direction downstream of the flow direction of intake gas from the direction perpendicular to the flow direction of intake gas.

In the fourth configuration of the invention, any one of the aforementioned first to third configurations is modified as follows. That is, a difference in height position between an opening portion of the water suction pipe into the outlet pipe and an end portion of the water suction pipe on the reservoir side is set such that condensed water accumulated in the reservoir can be sucked into the outlet pipe due to a difference in pressure between both ends of the water suction pipe even during idling rotation of the supercharging internal combustion engine, and an inner diameter of the water suction pipe that is made constant along an entire length of the water suction pipe is set such that condensed water accumulated in the reservoir is not sucked into the outlet pipe in large quantity at once when the engine is started.

In the fifth configuration of the invention, any one of the aforementioned first to fourth configurations is modified as follows. That is, a bottom wall of the reservoir descends toward the end portion of the water suction pipe on the reservoir side. That portion of the bottom wall of the reservoir which is located in a vicinity of the end portion of the water suction pipe on the reservoir side forms a lowermost portion of the bottom wall of the reservoir.

In the sixth configuration of the invention, any one of the aforementioned first to fifth configurations is modified as follows. That is, the low temperature-side tank is vertically partitioned by a partition board into an upper chamber through which intake gas flows and a lower chamber that constitutes the reservoir, and a water drop opening through which condensed water on the partition board is dropped into the reservoir is provided through the partition board, at a lowermost portion of the partition board including the outlet pipe.

In the seventh configuration of the invention, the aforementioned sixth configuration is modified as follows. That is, the low temperature-side tank is configured as a container that opens upward and that has a bottom wall and lateral walls. The partition board extends along opposed lateral walls that are opposed to each other in the direction perpendicular to the flow direction of intake gas and that extend in the flow direction of intake gas, and the opposed lateral walls are coupled to the partition board.

In the eighth configuration of the invention, the aforementioned sixth or seventh configuration is modified as follows. That is, the partition board has an upstream-side portion and a downstream-side portion in the flow direction of intake gas, and the partition board is formed in such a shape as to descend from the upstream-side portion toward the downstream-side portion. The water drop opening is provided through the downstream-side portion of the partition board. The upstream-side portion of the partition board forms, on a lower surface side of the upstream-side portion, a space portion for absorbing an increase in volume when condensed water accumulated in the reservoir freezes while blocking the water drop opening.

In the ninth configuration of the invention, any one of the aforementioned sixth to eighth configurations is modified as follows. That is, a baffle plate is provided on an upper surface of the partition board. The baffle plate is arranged in such a manner as to prevent condensed water from flowing from the low temperature-side tank to the outlet pipe when condensed water overflows onto the partition board. The upper chamber is ensured, above the baffle plate, of a cross-sectional area that is equal to or larger than a cross-sectional area of the outlet pipe.

In the tenth configuration of the invention, the aforementioned ninth configuration is modified as follows. That is, a plurality of baffle plates are provided. Openings through which water on the partition board can pass are provided through the baffle plates respectively. The opening of at least one of the baffle plates is offset from a same straight line so as to prevent the openings of all the baffle plates from being located on the same straight line.

In the eleventh configuration of the invention, the aforementioned tenth configuration is modified as follows. That is, the baffle plates are provided in such a manner as to be inclined diagonally upstream or diagonally downstream from opening regions thereof.

In the twelfth configuration of the invention, any one of the aforementioned sixth to eleventh configurations is modified as follows. That is, the water suction pipe penetrates the partition board from inside the reservoir, extends to the upper chamber, bends in the upper chamber, protrudes into the outlet pipe from inside the upper chamber, and opens into the outlet pipe.

In the thirteenth configuration of the invention, the aforementioned twelfth configuration is modified as follows. That is, a lower end of the water suction pipe is diagonally cut with respect to the bottom wall of the reservoir.

In the fourteenth configuration of the invention, any one of the aforementioned first to eleventh configurations is modified as follows. That is, the water suction pipe once exits the low temperature-side tank, and couples an interior of the reservoir and an interior of the outlet pipe to each other.

In the fifteenth configuration of the invention, any one of the aforementioned first to eleventh configurations is modified as follows. That is, the outlet pipe is provided with a cross-sectional area reduction portion that is gradually reduced in cross-sectional area in the flow direction of intake gas, a throat portion with a most reduced cross-sectional area, and a cross-sectional area increase portion that is gradually increased in cross-sectional area in the flow direction of intake gas, in this order in the flow direction of intake gas. An end of the opening of the water suction pipe into the outlet pipe is located at the throat portion.

In the sixteenth configuration of the invention, the aforementioned fifteenth configuration is modified as follows. That is, the water suction pipe extends from the reservoir to the upper chamber in the low temperature-side tank, and protrudes from inside the low temperature-side tank into the outlet pipe in the upper chamber. The end of the opening of the water suction pipe into the outlet pipe is located at a central portion of a cross-section of the outlet pipe at the throat portion.

In the seventeenth configuration of the invention, the aforementioned fifteenth configuration is modified as follows. That is, the water suction pipe once exits the low temperature-side tank and couples an interior of the reservoir and an interior of the outlet pipe to each other. The water suction pipe is connected to a hole that is provided through a wall of the outlet pipe, and an end of an opening of the hole to which the water suction pipe is connected to the outlet pipe is located on an inner peripheral surface of the outlet pipe at the throat portion.

In the eighteenth configuration of the invention, any one of the aforementioned first to eleventh configurations is modified as follows. That is, the intercooler is equipped with a down flow-type core through which intake gas flows downward, or a cross flow-type core through which intake gas flows laterally. The outlet pipe is provided at a vertically intermediate portion or an upper end portion of the low temperature-side tank. A field that is located below the outlet pipe in the low temperature-side tank constitutes the reservoir, and the water suction pipe extends from the bottom portion of the reservoir to such a position as to open into the outlet pipe.

### Effects of the Invention

According to any one of the first to fifth configurations of the invention, condensed water is temporarily drained to the reservoir from the passage through which intake gas flows. Thus, the condensed water in the intercooler is restrained or prevented from being sucked into the internal combustion engine in large quantity at once, and the internal combustion engine is restrained or prevented from suffering a malfunction such as liquid compression, rough idling or the like. Besides, the water suction pipe that extends from the bottom portion of the reservoir to such a position as to open into the outlet pipe is provided. Therefore, the condensed water temporarily accumulated in the reservoir is sucked into the outlet pipe through the water suction pipe due to a difference in pressure between a tank portion and an outlet pipe portion that results from a difference in flow velocity between the tank portion and the outlet pipe portion, a pressure loss and the like. The amount of suction through the water suction pipe is limited by the difference in pressure between both the ends of the water suction pipe, the difference in height position therebetween, the diameter of the pipe and the like. Therefore, the condensed water in the reservoir is not sucked into the outlet pipe in large quantity at once, and the internal combustion engine is restrained from suffering a malfunction such as liquid compression, rough idling or the like.

According to the second configuration of the invention, the opening of the water suction pipe into the outlet pipe is located upstream of the throttle valve in the flow direction of intake gas. Therefore, the occurrence of a problem in suction in a vacuum pipeline through the use of an intake manifold negative pressure, namely, a problem in that suction may be impossible due to an insufficient negative pressure in a low rotational speed range in the case of vehicles with small engine displacement can be suppressed.

According to the third configuration of the invention, the opening of the water suction pipe into the outlet pipe is oriented in the direction perpendicular to the flow direction of intake gas or in the direction downstream in the flow direction of intake gas from the direction perpendicular to the flow direction of intake gas. Therefore, the water suction pipe does not receive or is unlikely to receive the dynamic pressure of the flow of intake gas.

According to the fourth configuration of the invention, the difference in height position between both the ends of the water suction pipe is set as described in the fourth configuration. Therefore, the condensed water accumulated in the reservoir can be sucked into the outlet pipe due to the difference in pressure between both the ends of the water suction pipe, even during idling rotation of the supercharging internal combustion engine. Besides, the inner diameter of the water suction pipe, which is made constant along the entire length of the water suction pipe, is set as described in the fourth configuration. Therefore, the condensed water accumulated in the reservoir is restrained from being sucked into the outlet pipe in large quantity at once when the engine is started.

According to the fifth configuration of the invention, the bottom wall of the reservoir descends toward the end portion of the water suction pipe on the reservoir side. Therefore, the condensed water in the reservoir gathers toward the lower end of the water suction pipe.

According to the sixth or seventh configuration of the invention, the reservoir is partitioned from the upper chamber by the partition board. Therefore, the water in the reservoir is not taken away into the outlet pipe in large quantity at once due to the flow of the intake gas flowing through the upper chamber.

Condensed water is dropped into the reservoir through the water drop opening from the upper chamber through which intake gas flows. Therefore, condensed water is restrained from being accumulated in large quantity on the partition board. Therefore, condensed water is restrained from being sucked into the internal combustion engine in large quantity at once due to the accumulation of a large quantity of condensed water on the partition board.

According to the seventh configuration of the invention, the partition board extends along the opposed lateral walls that are opposed to each other in the direction perpendicular to the flow direction of intake gas and that extend in the flow direction of intake gas, and the opposed lateral walls are coupled to the partition board. Therefore, a partition board 36 restrains or prevents the lateral walls of a low temperature-side tank 26 from swelling due to the application of a supercharging pressure.

According to the eighth configuration of the invention, the partition board is formed in such a shape as to descend from the upstream-side portion toward the downstream-side portion, and the water drop opening is provided through the downstream-side portion of the partition board. Therefore, the condensed water flowing on the partition board can be introduced to the water drop opening, and can be effectively dropped into the reservoir through the water drop opening.

Besides, the upstream-side portion of the partition board forms the space portion for absorbing an increase in volume when condensed water accumulated in the reservoir freezes while blocking the water drop opening. Therefore, the low temperature-side tank is restrained from being damaged due to an increase in volume resulting from the freezing of condensed water.

According to the ninth configuration of the invention, when the reservoir is filled with condensed water and this condensed water overflows onto the partition board etc., the baffle plate reduces the speed at which condensed water is drained from the low temperature-side tank to the outlet pipe. Therefore, the internal combustion engine can be prevented or restrained from malfunctioning.

Besides, the upper chamber is ensured, above the baffle plate, of a cross-sectional area that is equal to or larger than the cross-sectional area of the outlet pipe. Therefore, the pressure loss of the flow of intake gas flowing through the upper chamber is restrained from deteriorating.

According to the tenth or eleventh configuration of the invention, the opening of at least one of the baffle plates is offset from the same straight line so as to prevent the openings of all the baffle plates from being located on the same straight line. Therefore, the speed at which the condensed water flowing on the partition board is drained to the outlet pipe is effectively reduced, and the internal combustion engine is effectively prevented or restrained from malfunctioning.

According to the eleventh configuration of the invention, the baffle plates are provided in such a manner as to be inclined diagonally upstream or diagonally downstream from the opening regions thereof. In the case where the baffle plates are oriented diagonally upstream, the condensed water flowing from the upstream side can be effectively introduced to the openings. In the case where the baffle plates are oriented diagonally downstream, the speed at which condensed water is drained to the outlet pipe is low, and the volume of a field downstream of the most downstream one of the baffle plates, which is an uncontrollable field, can be reduced.

According to the twelfth or thirteenth configuration of the invention, the water suction pipe is arranged in the low temperature-side tank and the outlet pipe. Therefore, even when the water suction pipe is provided, the contours of the low temperature-side tank and the outlet pipe do not increase in size due to the presence of the water suction pipe. As a result, the intake gas cooling device is as compact as in the case where the water suction pipe is not provided, and is excellent in mountability on vehicles.

According to the thirteenth configuration of the invention, the lower end of the water suction pipe is diagonally cut with respect to the bottom wall of the reservoir. Therefore, the lower end of the water suction pipe is restrained from being blocked by the bottom wall of the reservoir.

According to the fourteenth configuration of the invention, even in the case where the water suction pipe does not reach the lowermost end of the low temperature-side tank for the reason that the low temperature-side tank is deep, irregular in shape etc., the interior of the reservoir and the interior of the outlet pipe can be easily coupled to each other by configuring the water suction pipe from a pipe (including a case where the pipe is a hose) that is laid out outside the low temperature-side tank.

According to any one of the fifteenth to seventeenth configurations of the invention, the end of the opening of the water suction pipe into the outlet pipe is provided at the throat portion. Therefore, the Venturi effect of the outlet pipe is enhanced, and the effect of sucking condensed water by the water suction pipe is enhanced.

According to the sixteenth configuration of the invention, the end of the opening of the water suction pipe into the outlet pipe is located at the central portion of the cross-section of the outlet pipe at the throat portion. This arrangement structure of the end of the opening of the water suction pipe at the throat portion is applicable to the case where the water suction pipe protrudes from inside the low temperature-side tank into the outlet pipe.

According to the seventeenth configuration of the invention, the end of the opening of the water suction pipe into the outlet pipe is located on the inner peripheral surface of the outlet pipe at the throat portion. This arrangement structure of the end of the opening of the water suction pipe at the throat portion is applicable to the case where the water suction pipe once exits the low temperature-side tank and couples the interior of the reservoir and the interior of the outlet pipe to each other.

According to the eighteenth configuration of the invention, condensed water can be sucked while being restrained from being sucked in large quantity at once, for down flow-type or cross flow-type intercoolers as well.

### BRIEF DESCRIPTION OF THE DRAWINGS

[FIG. 1] FIG. 1 is a front view of the entirety of an intake gas cooling device for a supercharging internal combustion engine (hereinafter referred to simply as "the intake gas cooling device" as well) according to a first embodiment of the invention.
[FIG. 2] FIG. 2 is a cross-sectional view of the intake gas cooling device according to the first embodiment of the invention, as viewed along the direction of a front view of a low temperature-side tank and the vicinity thereof.
[FIG. 3] FIG. 3 is a plan view of the low temperature-side tank and the vicinity thereof in the intake gas cooling device according to the first embodiment of the invention.
[FIG. 4] FIG. 4 is a lateral view of the low temperature-side tank and the vicinity thereof in the intake gas cooling device according to the first embodiment of the invention.
[FIG. 5] FIG. 5 is a plan view of the low temperature-side tank and the vicinity thereof in the case where lateral walls of the low temperature-side tank are reinforced by a partition board in a structure that can be adopted by the intake gas cooling device according to the first embodiment of the invention.
[FIG. 6] FIG. 6 is a cross-sectional view along the direction of a front view of the low temperature-side tank and the vicinity thereof in FIG. 5.
[FIG. 7] FIG. 7 is a partial cross-sectional view of the low temperature-side tank, the partition board and baffle plates in a configuration that can be adopted by the intake gas cooling device according to the first embodiment of the invention.
[FIG. 8] FIG. 8 is a perspective view of a single baffle plate having an opening configured as a slit in a configuration that can be adopted by the intake gas cooling device according to the first embodiment of the invention.
[FIG. 9] FIG. 9 is a plan view of a low temperature-side tank having a plurality of baffle plates with openings offset from a straight line, and the vicinity of the low temperature-side tank, in a configuration that can be adopted by the intake gas cooling device according to the first embodiment of the invention.
[FIG. 10] FIG. 10 is a plan view of a low temperature-side tank having baffle plates that are arranged in such a manner as to be concave downstream (convex upstream) in a flow direction of intake gas, and the vicinity of the low temperature-side tank, in a configuration that can be adopted by the intake gas cooling device according to the first embodiment of the invention.
[FIG. 11] FIG. 11 is a perspective view of a single baffle plate having openings configured as holes, in a configuration that can be adopted by the intake gas cooling device according to the first embodiment of the invention.
[FIG. 12] FIG. 12 is a cross-sectional view of an intake gas cooling device according to a second embodiment of the invention as viewed along the direction of a front view of a low temperature-side tank and the vicinity thereof.
[FIG. 13] FIG. 13 is a cross-sectional view of a structure that can be adopted by an intake gas cooling device according to a third embodiment of the invention as viewed along the direction of a front view of an outlet pipe and a water suction pipe protruding into the outlet pipe.
[FIG. 14] FIG. 14 is a cross-sectional view of a structure that can be adopted by the intake gas cooling device according to the third embodiment of the invention as viewed along the direction of a front view of the outlet pipe and the water suction pipe opening to a wall surface of the outlet pipe.
[FIG. 15] FIG. 15 is a front view of the entirety of an intake gas cooling device according to a fourth embodiment of the invention.
[FIG. 16] FIG. 16 is a lateral view of a low temperature-side tank and the vicinity thereof in the intake gas cooling device according to the fourth embodiment of the invention.

### MODES FOR CARRYING OUT THE INVENTION

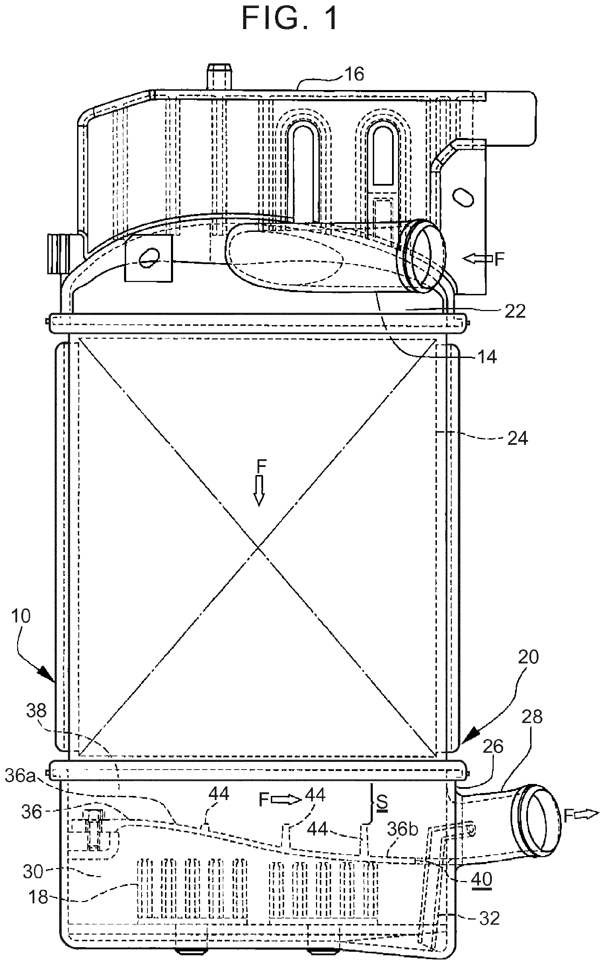

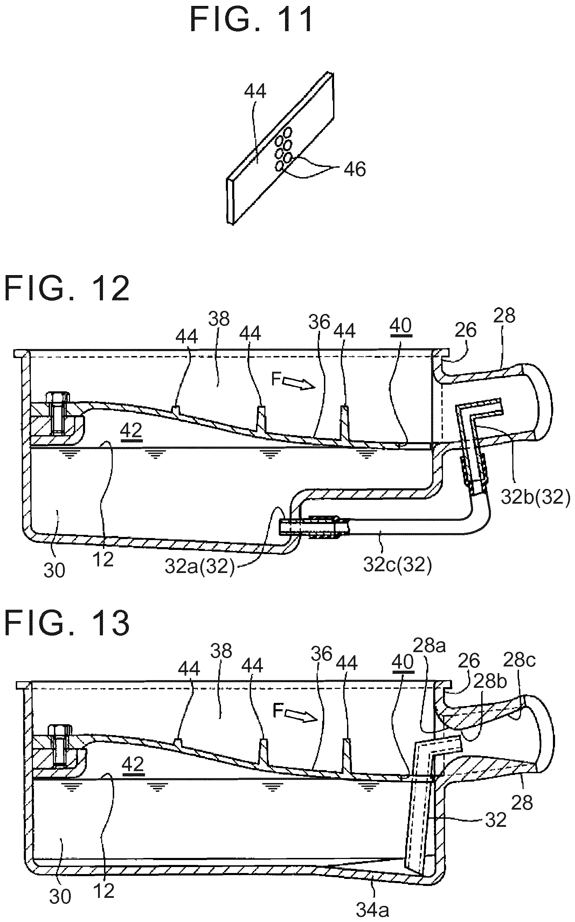

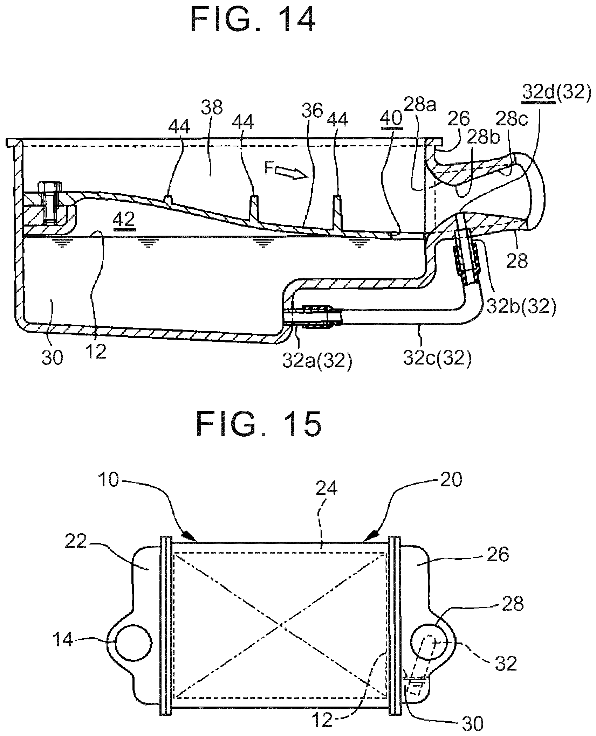

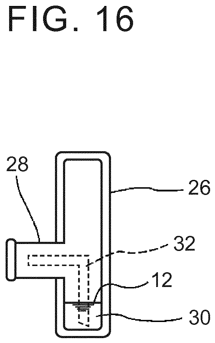

An intake gas cooling device 10 for a supercharging internal combustion engine according to the invention will be described with reference to FIGS. 1 to 16. It should be noted, however, that the internal combustion engine and a supercharger are not shown in any of the drawings. FIGS. 1 to 11 show the first embodiment of the invention and various structures that can be adopted by the first embodiment of the invention. Part of the structure of the first embodiment of the invention is also applicable to the second to fourth embodiments of the invention or the second and third embodiments of the invention. FIG. 12 shows the second embodiment of the invention. FIGS. 13 and 14 show the third embodiment of the invention. FIGS. 15 and 16 show the fourth embodiment of the invention. Identical or corresponding component parts in all the embodiments of the invention are denoted by the same reference symbols respectively in all the embodiment of the invention.

### [First Embodiment]

The first embodiment of the invention will be described with reference to FIGS. 1 to 11.

First of all, the configuration will be described.

As shown in FIG. 1, the intake gas cooling device 10 for the supercharging internal combustion engine according to the invention is equipped with an intercooler 20 in an intake gas passage of the internal combustion engine. Intake gas may also be referred to as supercharging air. In FIG. 1, arrows F indicate the flow direction of intake gas. The internal combustion engine with a supercharger may be a spark ignition internal combustion engine or a diesel internal combustion engine. The supercharger may be a turbocharger or a non-turbo mechanical supercharger (a mechanically operated supercharger). The intercooler 20 is configured as a heat exchanger that is installed in an intake gas passage. The intercooler 20 cools the intake gas that has been compressed by the supercharger and heated up, and enhances the filling efficiency of the internal combustion engine. A throttle valve is provided downstream of the intercooler 20, namely, between the intercooler 20 and the internal combustion engine. A surge tank and an intake manifold are provided between the throttle valve and the internal combustion engine.

The intercooler 20 has a high temperature-side tank 22 into which intake gas flows, an intercooler core (hereinafter referred to simply as "the core") 24 that exchanges heat, and a low temperature-side tank 26 from which intake gas flows out. The high temperature-side tank 22, the core 24, and the low temperature-side tank 26 are provided in this order in the flow direction of intake gas. As shown in FIGS. 1 to 4, the core 24 may be a down flow-type core through which intake gas flows downward, or a cross flow-type core through which intake gas flows laterally. In the case of the down flow-type core, the high temperature-side tank 22 is provided above the core 24, and the low temperature-side tank 26 is provided below the core 24. In the case of the cross flow-type core, the high temperature-side tank 22 and the low temperature-side tank 26 are provided laterally of the core 24 respectively. Conventionally known structures are adopted as the structures of the high temperature-side tank 22 and the core 24. Since these structures are known, the detailed description thereof will be omitted.

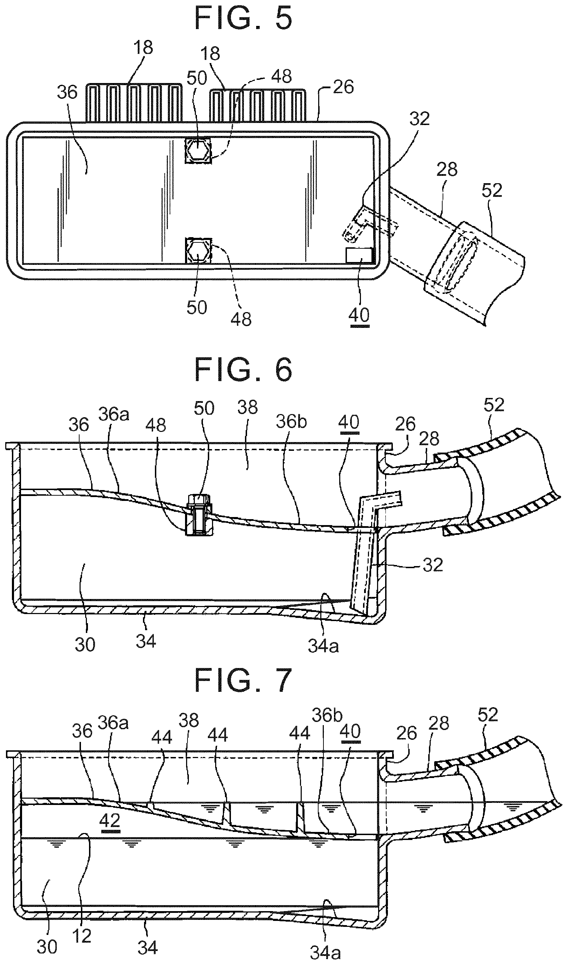

An inlet pipe 14 that constitutes part of an intake passage of the internal combustion engine and that serves as an inlet of intake gas is connected to the high temperature-side tank 22. An outlet pipe 28 that constitutes part of the intake passage of the internal combustion engine and that serves as an outlet gas of intake gas is connected to the low temperature-side tank 26. The inlet pipe 14 and the outlet pipe 28 may be formed separately from the intercooler 20 and connected to the intercooler 20, or may be formed integrally with the intercooler 20. It is desirable that the outlet pipe 28 extend in such a manner as to be inclined diagonally upward from a lateral wall of the low temperature-side tank 26 toward the throttle valve. In this case, even when the condensed water in the low temperature-side tank 26 overflows into the outlet pipe 28, this condensed water returns to the low temperature-side tank 26 because of its own weight. A hose 52 (FIGS. 5 to 7) or a pipe, which constitutes the intake passage of the internal combustion engine, is fitted to the outlet pipe 28. The outlet pipe 28 is fitted in the hose 52 or the pipe. The high temperature-side tank 22 is supported by a vehicle body via a bracket 16, and the low temperature-side tank 26 is supported by the vehicle body via a rib 18.

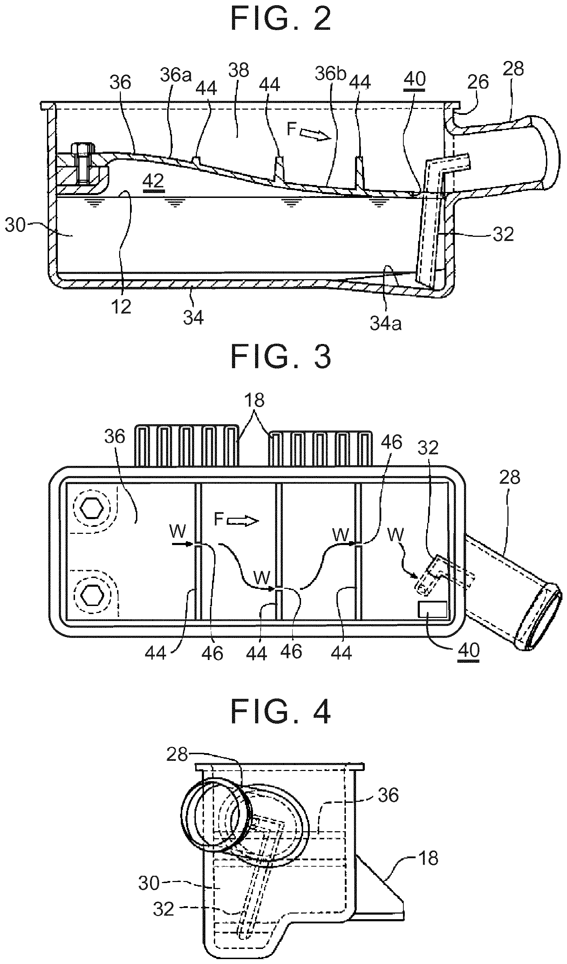

As shown in FIGS. 1 and 2, a reservoir 30 that temporarily accumulates condensed water 12 is provided at a lower portion of the low temperature-side tank 26. A water suction pipe 32 that extends from a bottom portion of the reservoir 30 to such a position as to open into the outlet pipe 28 is provided. The position of the opening of the water suction pipe 32 into the outlet pipe 28 is located upstream of the throttle valve in the flow direction of intake gas.

The outlet pipe 28 is located downstream of the low temperature-side tank 26 in the flow direction of intake gas. The passage cross-sectional area of intake gas in the outlet pipe 28 is smaller than the passage cross-sectional area of intake gas in the low temperature-side tank 26. The flow velocity of intake gas in the outlet pipe 28 is higher than the flow velocity of intake gas in the low temperature-side tank 26. The intake gas in the low temperature-side tank 26 increases in flow velocity in the outlet pipe 28, so part of the static pressure in the low temperature-side tank 26 changes into a dynamic pressure in the outlet pipe 28, and the static pressure in the outlet pipe 28 becomes lower than the static pressure in the low temperature-side tank 26. Owing to the Venturi effect obtained from a decrease in static pressure resulting from this difference in flow velocity, and the pressure loss of intake gas, the static pressure of the intake gas in the outlet pipe 28 is lower than the static pressure of the intake gas in the low temperature-side tank 26. Owing to this difference in pressure, the condensed water 12 (FIG. 2) accumulated in the reservoir 30 is sucked into the outlet pipe 28 from the bottom portion of the reservoir 30 through the water suction pipe 32. The opening of the water suction pipe 32 into the outlet pipe 28 is located upstream of the throttle valve in the flow direction of intake gas. Therefore, the condensed water 12 is sucked by the water suction pipe 32 without utilizing an intake negative pressure downstream of the throttle.

As shown in FIGS. 1 to 4, the opening of the water suction pipe 32 toward the outlet pipe 28 side may be located inside the outlet pipe 28, or may be located on an inner wall surface of the outlet pipe 28 as shown in FIG. 14, which will be described later. The water suction pipe 32 opens downstream in the flow direction of intake gas from a direction perpendicular to the flow direction of intake gas, or opens in the direction perpendicular to the flow direction of intake gas, so as not to receive the dynamic pressure of the flow of intake gas. The water suction pipe 32 protrudes from inside the low temperature-side tank 26 into the outlet pipe 28, or ends on the inner wall surface of the outlet pipe 28 (FIG. 14). As shown in FIG. 2, a bottom wall 34 of the reservoir 30 descends toward an end portion of the water suction pipe 32 on the reservoir 30 side. That portion of the bottom wall 34 of the reservoir 30 which is in the vicinity of the end portion of the water suction pipe 32 on the reservoir 30 side forms a lowermost portion 34a of the bottom wall 34 of the reservoir 30. Thus, the condensed water 12 in the reservoir 30 gathers toward the lower end of the water suction pipe 32. It is desirable that the end portion of the water suction pipe 32 on the reservoir 30 side be diagonally cut with respect to the bottom wall 34 of the reservoir 30 so as not to be blocked by adhering to the bottom wall 34 of the reservoir 30.

The difference in water head between both the end portions of the water suction pipe 32, and hence the height of the reservoir 30 are determined such that the condensed water 12 temporarily accumulated in the reservoir 30 is sucked into the outlet pipe 28 due to the difference in pressure between both the end portions of the water suction pipe 32 even at the time of idling operation of the engine. From the standpoint of manufacturability and formability, it is desirable that the inner diameter of the water suction pipe 32 be constant along the entire length of the water suction pipe 32. Besides, the inner diameter of the water suction pipe 32, which is made constant along the entire length of the water suction pipe 32, is set equal to or smaller than a constant value (e.g., 3 mm, desirably 2 mm, but not limited to 3 mm or 2 mm) so as to prevent the internal combustion engine from malfunctioning through the abrupt suction of a large quantity of the condensed water 12 temporarily accumulated in the reservoir 30 into the outlet pipe 28 at the time of the start of the engine or the like. From the standpoint of lightness and formability, it is desirable that the low temperature-side tank 26 and the water suction pipe 32 be made of a light alloy such as aluminum alloy or be made of plastic.

The foregoing configuration is also applicable to the second to fourth embodiments of the invention.

As shown in FIGS. 1 and 2, the low temperature-side tank 26 is vertically partitioned by the partition board 36 into an upper chamber 38 through which intake gas flows, and a lower chamber that constitutes the reservoir 30 (which is the same as the reservoir 30 and hence is denoted also by the reference numeral 30). A water drop opening 40 through which the condensed water 12 on the partition board 36 is dropped into the reservoir 30 is provided through the partition board 36, in a region corresponding to a lowermost portion of the partition board 36 and the outlet pipe 28. The opening 40 may be a hole that is provided through the partition board 36, or a notch that is provided in the partition board 36. That portion of the partition board 36 which is in the vicinity of the opening may be inclined diagonally downward toward the opening 40. In the case where the water suction pipe 32 is arranged in the low temperature-side tank 26, the water suction pipe 32 extends from the reservoir 30 to the upper chamber 38 while penetrating the partition board 36. That region of the water suction pipe 32 which penetrates the partition board 36 may be the region of the water drop opening 40 or a region other than the water drop opening 40.

The partition board 36 has an upstream-side portion 36a and a downstream-side portion 36b in the flow direction of intake gas in the upper chamber 38. The partition board 36 is formed in such a shape as to descend from the upstream-side portion 36a toward the downstream-side portion 36b, and guides the flow F of intake gas to the outlet pipe 28. The water drop opening 40 is provided through the downstream-side portion 36b of the partition board 36. It is desirable that that portion of the partition board 36 which is in the vicinity of the water drop opening 40 be inclined in such a manner as to descend toward the water drop opening 40.

As shown in FIG. 2, the upstream-side portion 36a of the partition board 36 forms a space portion 42 for absorbing an increase in volume when the condensed water 12 accumulated in the reservoir 30 freezes on a lower surface side of the upstream-side portion 36a while blocking the water drop opening 40. The space portion 42 is a space between a lower surface of the upstream-side portion 36a of the partition board 36 and an upper surface of the condensed water 12 with the condensed water 12 blocking the water drop opening 40.

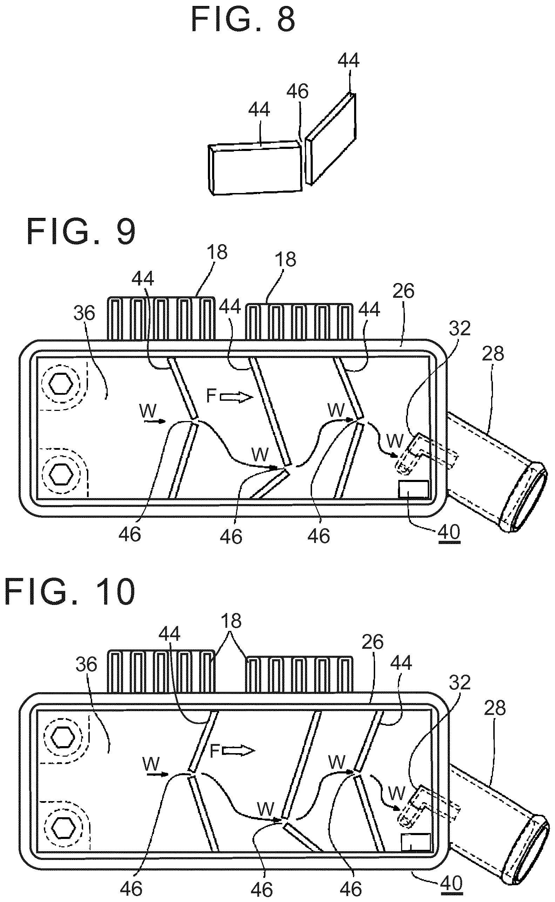

As shown in FIGS. 1 to 3, baffle plates 44 are provided on an upper surface of the partition board 36. The baffle plates 44 are arranged in such a manner as to prevent the condensed water 12 from flowing from the low temperature-side tank 26 to the outlet pipe 28 when the condensed water 12 overflows onto the partition board 36 from the reservoir 30. However, one or more openings 46 (FIG. 3 and FIGS. 8 to 11) through which the water on the partition board 36 can pass are provided through each of the baffle plates 44, such that the condensed water 12 is not completely stopped from flowing from the low temperature-side tank 26 to the outlet pipe 28. Each of the openings 46 may be a slit (FIGS. 8 to 10) that opens along the entire height of a corresponding one of the baffle plates 44, or a hole (FIG. 11) that opens along part of the height direction of a corresponding one of the baffle plates 44. The respective baffle plates 44 extend between opposed lateral surfaces of the low temperature-side tank 26 except in the regions of the openings 46. Besides, the number of baffle plates 44, the distance therebetween, the height thereof (the height from the partition board 36 to an upper end of each of the baffle plates 44), and the arrangement thereof are set such that the amount of the liquid accumulated among the baffle plates 44, the amount of the liquid accumulated downstream of the most downstream one of the baffle plates 44, and the amount of the liquid accumulated upstream of the most upstream one of the baffle plates 44 are all equal to or smaller than an amount that causes the internal combustion engine to malfunction even if the condensed water is taken away at once by the internal combustion engine due to the flow of intake gas when the condensed water overflows onto the partition board 36 as shown in FIG. 7 and this liquid is accumulated to the positions of the upper ends of the baffle plates 44.

As shown in FIGS. 1 and 2, the upper chamber 38 is ensured, above the baffle plates 44 and below the core 24, of a cross-sectional area (= a height S × a width) that is equal to or larger than the cross-sectional area of the outlet pipe 28. In the example shown in the drawings, the upper ends of the plurality of the baffle plates 44 are located substantially at the same height. A cross-sectional area (= the height S × the width) that is equal to or larger than the cross-sectional area of the outlet pipe 28 is ensured above each of the plurality of the baffle plates 44. Thus, the pressure loss that occurs when intake gas flows in the upper chamber 38 is reduced to or below the pressure loss that occurs when intake gas flows in the outlet pipe 28.

As shown in FIG. 9, with a view to preventing all the openings 46 that are provided through the baffle plates 44 from being located on the same straight line (e.g., a straight line that passes through the opening 46 that is provided through one of the baffle plates 44 and that is parallel to the opposed lateral surfaces of the low temperature-side tank 26 extending along the flow direction of intake gas), the opening 46 that is provided through at least one of the baffle plates 44 is offset from the same straight line.

The baffle plates 44 may be provided in such a manner as to be inclined diagonally upstream from the regions of the openings 46 as shown in FIG. 9, or may be provided in such a manner as to be inclined downstream from the regions of the openings 46 as shown in FIG. 10.

The low temperature-side tank 26 is configured as a container that opens upward, and has a bottom wall and lateral walls. As shown in FIGS. 5 and 6, plates 48 that protrude toward the partition board 36 side are attached, at a central portion in the flow direction of intake gas, to the opposed lateral walls that extend in the flow direction of intake gas and that are opposed to each other in the direction perpendicular to the flow direction of intake gas. The plates 48 may be coupled to the partition board 36 by bolts and nuts 50. Owing to this structure, the partition board 36 prevents the lateral walls of the low temperature-side tank 26 from swelling due to the application of a supercharging pressure.

From the standpoint of lightness and formability, it is desirable that the partition board 36 and the baffle plates 44 be made of, for example, aluminum alloy or plastic.

The foregoing configurations of the partition board 36 and the baffle plates 44 are also applicable to the second and third embodiments of the invention.

The first embodiment of the invention further has the following configuration.

The water suction pipe 32 is located in the low temperature-side tank 26 and the outlet pipe 28. The water suction pipe 32 penetrates the partition board 36 from inside the reservoir 30, extends into the upper chamber 38, bends in the upper chamber 38, protrudes from inside the upper chamber 38 into the outlet pipe 28, and opens into the outlet pipe 28. The water suction pipe 32 may be supported by the partition board 36. The water suction pipe 32 opens downstream in the flow direction of intake gas in the outlet pipe 28.

Next, the operation and effect will be described.

Conventionally, the condensed water that dissolves to be accumulated in the low temperature-side tank 26 when the internal combustion engine is stopped after freezing in the intercooler 20 during running in a cold climate may be sucked into the internal combustion engine in large quantity at once due to the flow of intake air when the internal combustion engine is started, and the internal combustion engine may suffer a malfunction such as liquid compression, rough idling or the like. This condensed water may include the condensed water that dissolves to be accumulated in the low temperature-side tank 26 during the operation of the internal combustion engine after freezing in the intercooler 20 and that is sucked into the internal combustion engine in large quantity at once.

In contrast, according to the invention, the condensed water 12 is temporarily drained to the reservoir 30 from the space in the upper chamber 38 through which intake gas flows. Thus, the condensed water 12 is restrained or prevented from being sucked into the internal combustion engine in large quantity at once. As a result, the internal combustion engine is restrained or prevented from suffering a malfunction such as liquid compression, rough idling or the like.

Besides, the water suction pipe 32 that extends from the bottom portion of the reservoir 30 to such a position as to open into the outlet pipe 28 is provided. Therefore, the condensed water 12 temporarily accumulated in the reservoir 30 is sucked into the outlet pipe 28 through the water suction pipe 32 due to the difference in pressure between the region of the low temperature-side tank 26 and the region of the outlet pipe 28 that results from the difference in flow velocity between the region of the low temperature-side tank 26 and the region of the outlet pipe 28, the pressure loss or the like. Even during idling rotation, the condensed water accumulated in the reservoir 30 can be sucked into the outlet pipe 28. The amount of suction through the water suction pipe 32 is limited by the difference in pressure between both the ends of the water suction pipe 32, the difference in height position therebetween, the inner diameter of the pipe and the like. Therefore, the condensed water in the reservoir 30 is not sucked into the outlet pipe 28 in large quantity at once, and the internal combustion engine is restrained from suffering a malfunction such as liquid compression, rough idling or the like.

Besides, no drain is set to drain condensed water to the outside of the intake passage, so no regular maintenance work is required. Besides, the water suction pipe 32 is located upstream of the throttle valve, and the intake manifold negative pressure is not utilized to suck condensed water. Even a vehicle with small engine displacement does not lapse into a situation where condensed water cannot be sucked due to an insufficient negative pressure in a low rotational speed range. Besides, the intake manifold negative pressure is not utilized. Therefore, no vacuum pipeline is required from the intercooler 20 to the intake manifold, and the operation and space for laying out a vacuum pipeline are unnecessary.

The reservoir 30 is partitioned from the upper chamber 38 by the partition board 36. Therefore, the condensed water in the reservoir 30 is never taken away into the outlet pipe 28 in large quantity at once due to the flow of the intake gas flowing through the upper chamber 38.

Besides, the condensed water 12 is dropped into the reservoir 30 through the water drop opening 40, from the upper chamber 38 through which intake gas flows. Therefore, the condensed water 12 is restrained from being accumulated in large quantity on the partition board 36. As a result, the condensed water 12 on the partition board 36 is restrained from being sucked into the internal combustion engine in large quantity at once.

The partition board 36 is formed in such a shape as to descend from the upstream-side portion 36a of the partition board 36 toward the downstream-side portion 36b thereof, and the water drop opening 40 is provided through the downstream-side portion 36b of the partition board 36. Therefore, the condensed water 12 flowing on the partition board 36 can be introduced to the water drop opening 40, and can be effectively dropped into the reservoir 30 through the water drop opening 40.

The upstream-side portion 36a of the partition board 36 forms the space portion 42 for absorbing an increase in volume when the condensed water 12 accumulated in the reservoir 30 rises in level and freezes while blocking the water drop opening 40. Therefore, the low temperature-side tank 26 is restrained from being damaged due to an increase in volume resulting from the freezing of the condensed water 12.

The partition board 36 extends between the opposed lateral surfaces of the low temperature-side tank 26, and is coupled to the opposed lateral surfaces of the low temperature-side tank 26. Therefore, the opposed lateral surfaces of the low temperature-side tank 26 can be restrained or prevented from deforming in such a manner as to swell outward when a supercharging pressure that is equal to or higher than the atmospheric pressure is applied to the opposed lateral surfaces of the low temperature-side tank 26. Thus, the pressure-proof reinforcing structure of the opposed lateral surfaces of the low temperature-side tank 26 can be simplified.

The baffle plates 44 are arranged in such a manner as to prevent the condensed water 12 from flowing from the low temperature-side tank 26 to the outlet pipe 28 when the condensed water 12 overflows onto the partition board 36. Therefore, the baffle plates 44 reduce the speed at which the condensed water 12 is drained from the low temperature-side tank 26 to the outlet pipe 28, and the internal combustion engine can be prevented or restrained from malfunctioning.

The upper chamber 38 is ensured, above the baffle plates 44, of a cross-sectional area (= the height S × the width) that is equal to or larger than the cross-sectional area of the outlet pipe 28. Therefore, the pressure loss of intake gas is restrained from deteriorating when intake gas flows through the upper chamber 38.

As shown in FIGS. 3, 9 and 10, in the case where the openings 46 of all the baffle plates 44 are provided in such a manner as not to be located on the same straight line, the flow W of the condensed water 12 on the partition board 36 has a zigzag shape. As a result, the speed at which the condensed water 12 flowing on the partition board 36 is drained to the outlet pipe 28 is effectively reduced, and the internal combustion engine is effectively prevented or restrained from malfunctioning.

As shown in FIG. 10, in the case where the baffle plates 4 are provided in such a manner as to be inclined diagonally downstream from the regions of the openings 46, the area of the field downstream of the most downstream one of the baffle plates 44 can be made smaller than in the case of FIG. 9. The takeaway amount of the condensed water on the partition board 36 in the field downstream of the most downstream one of the baffle plates 44 cannot be reduced by offsetting the openings 46 from the same straight line. However, the area of the field where the takeaway amount cannot be reduced can be made smaller than in the case of FIG. 9, by adopting the structure of FIG. 10.

As shown in FIGS. 5 and 6, in the case where the plates 48 that are attached to the opposed lateral surfaces of the low temperature-side tank 26 are coupled to the baffle plates 44 by the bolts and nuts 50, the wall rigidity of the opposed lateral walls of the low temperature-side tank 26 increases, and the lateral walls of the low temperature-side tank 26 are restrained or prevented from swelling when a supercharging pressure is applied thereto. The foregoing operation and effect of the partition board 36 and the baffle plates 44 are also applicable to the second and third embodiments of the invention.

The first embodiment of the invention further has the following operation and effect.

The water suction pipe 32 is arranged in the low temperature-side tank 26 and the outlet pipe 28. Therefore, even when the water suction pipe 32 is provided, the contours of the low temperature-side tank 26 and the outlet pipe 28 do not become larger than in the conventional art in which the water suction pipe 32 is not provided. As a result, the intake gas cooling device 10 is compact, and is excellent in mountability on vehicles.

### [Second Embodiment]

The second embodiment of the invention has the following configuration, operation and effect shown in FIG. 12 in addition to those which are also applicable to the second embodiment of the invention in the configuration, operation and effect according to the first embodiment of the invention.

First of all, the configuration will be described. The water suction pipe 32 once exits the low temperature-side tank 26 from inside the low temperature-side tank 26, and couples the interior of the reservoir 30 and the interior of the outlet pipe 28 to each other. For example, the water suction pipe 32 may be constituted of a coupling pipe 32a that penetrates the wall of the reservoir 30, a coupling pipe 32b that penetrates the wall of the outlet pipe 28, and a hose 32c that connects both the coupling pipes 32a and 32b to each other outside the reservoir 30.

Next, the operation and effect will be described. Even in the case where the water suction pipe 32 does not reach the lowermost end of the low temperature-side tank 26 for the reason that the low temperature-side tank 26 is deep or complicated in shape etc., the interior of the reservoir 30 and the interior of the outlet pipe 28 can be easily coupled to each other by configuring the water suction pipe 32 from a pipe (including a case where the pipe is the hose 32c) that is laid out outside the low temperature-side tank 26. Although the contour increases in size, the degree of freedom in layout is enhanced.

### [Third Embodiment]

The third embodiment of the invention has the following configuration, operation and effect shown in FIGS. 13 and 14 in addition to those which are also applicable to the third embodiment of the invention in the configuration, operation and effect according to the first embodiment of the invention.

First of all, the configuration will be described. The outlet pipe 28 is provided with a cross-sectional area reduction portion 28a that is gradually reduced in cross-sectional area in the flow direction of intake gas, a throat portion 28b with a most reduced cross-sectional area, and a cross-sectional area increase portion 28c that is gradually increased in cross-sectional area in the flow direction of intake gas, in this order in the flow direction of intake gas. Accordingly, in the third embodiment of the invention, the outlet pipe 28 is a Venturi tube. The end of the opening of the water suction pipe 32 into the outlet pipe 28 is located at a central portion or an outer peripheral portion of the throat portion 28b.

In the example of FIG. 13, the water suction pipe 32 extends from the reservoir 30 to the upper chamber 38 in the low temperature-side tank 26, and protrudes from the upper chamber 38 in the low temperature-side tank 26 into the outlet pipe 28. The end of the opening of the water suction pipe 32 into the outlet pipe 28 is located at a central portion of the cross-sectional area of the outlet pipe 28 at the throat portion 28b.

In the example of FIG. 14, the water suction pipe 32 once exits the low temperature-side tank 26 from inside the low temperature-side tank 26, and couples the interior of the reservoir 30 and the interior of the outlet pipe 28 to each other. The water suction pipe 32 is connected to a hole 32d that is provided through the wall of the outlet pipe 28. The end of the opening of the water suction pipe 32 into the outlet pipe 28 is located on the inner peripheral surface of the outlet pipe 28 at the throat portion 28b.

Next, the operation and effect will be described. The outlet pipe 28 is configured as a Venturi tube, so the pressure loss can be reduced, and a low pressure can be obtained at the end of the opening of the water suction pipe 32 into the outlet pipe 28. Besides, the end of the opening of the water suction pipe 32 into the outlet pipe 28 is provided at the throat portion 28b, so the Venturi effect of the outlet pipe 28 is enhanced, and the effect of sucking condensed water by the water suction pipe 32 is enhanced.

### [Fourth Embodiment]

The fourth embodiment of the invention has the following configuration, operation and effect shown in FIGS. 15 and 16 in addition to those which are also applicable to the fourth embodiment of the invention in the configuration, operation and effect according to the first embodiment of the invention.

First of all, the configuration will be described. The core 24 is configured as a cross flow-type core through which intake gas flows laterally in FIG. 15. In this case, while extending in the vertical direction of the low temperature-side tank 26, the outlet pipe 28 is provided in a region other than a lower end portion of the low temperature-side tank 26, hence at a vertically intermediate portion or an upper end portion of the low temperature-side tank 26. The outlet pipe 28 extends toward the back side in the direction perpendicular to the sheet of FIG. 15, and extends in the direction perpendicular to the lateral direction of FIG. 15.

A field that is located below the outlet pipe 28 inside the low temperature-side tank 26 constitutes the reservoir 30. The water suction pipe 32 extends from the bottom portion of the reservoir 30 to such a position as to open into the outlet pipe 28. The water suction pipe 32 may be located in the low temperature-side tank 26 and the outlet pipe 28, or may once exit the low temperature-side tank 26 from the wall of the low temperature-side tank 26, penetrate the wall of the outlet pipe 28, and open into the outlet pipe 28. The partition board 36 is provided in the low temperature-side tank 26, while not shown in FIG. 16.

Next, the operation and effect will be described. The water suction pipe 32 extends from the bottom portion of the reservoir 30 to such a position as to open into the outlet pipe 28. Therefore, the condensed water 12 can be sucked while being restrained from being sucked at once for the cross flow-type intercooler 20 as well.

Incidentally, in a non claimed alternative, as shown in FIGS. 15 and 16, in the case where the lower end of the reservoir 30 is located at the same height position as the lower end of the core 24, the partition board 36 and the baffle plates 44 are not provided.

In the case where the lower end portion of the reservoir 30 extends downward from the lower end of the core 24 (not shown), the partition board 36 and the baffle plates 44 are provided according to the claims. In this case, the configuration, operation and effect of the partition board 36 and the baffle plates 44 that are regarded in the first embodiment of the invention as applicable to the second and third embodiments of the invention as well can be applied as the configuration, operation and effect of the partition board 36 and the baffle plates 44.

### Description of Reference Symbols

10 ... INTAKE GAS COOLING DEVICE FOR SUPERCHARGING INTERNAL COMBUSTION ENGINE
12 ... CONDENSED WATER
14 ... INLET PIPE
16 ... BRACKET
18 ... RIB
20 ... INTERCOOLER
22 ... HIGH TEMPERATURE-SIDE TANK
24 ... INTERCOOLER CORE (CORE)
26 ... LOW TEMPERATURE-SIDE TANK
28 ... OUTLET PIPE
28a ... CROSS-SECTIONAL AREA REDUCTION PORTION
28b ... THROAT PORTION
28c ... CROSS-SECTIONAL AREA INCREASE PORTION
30 ... RESERVOIR (LOWER CHAMBER)
32 ... WATER SUCTION PIPE
32a, 32b ... COUPLING PIPE
32c ... HOSE
32d ... HOLE
34 ... BOTTOM WALL OF RESERVOIR
34a ... LOWERMOST PORTION OF BOTTOM WALL OF RESERVOIR
36 ... PARTITION BOARD
36a ... UPSTREAM-SIDE PORTION
36b ... DOWNSTREAM-SIDE PORTION
38 ... UPPER CHAMBER
40 ... WATER DROP OPENING
42 ... SPACE PORTION FOR ABSORBING INCREASE IN VOLUME
44 ... BAFFLE PLATE
46 ... OPENING
48 ... PLATE
50 ... BOLT, NUT
52 ... HOSE

## Claims

1. An intake gas cooling device (10) for a supercharging internal combustion engine, the intake gas cooling device (10) comprising:
an intercooler (20) that is provided in an intake gas passage, the intercooler (20) having a low temperature-side tank (26), and the low temperature-side tank (26) being equipped with a reservoir (30) that is provided at a lower portion of the low temperature-side tank (26) to temporarily accumulate condensed water;
an outlet pipe (28) that is connected to the low temperature-side tank (26); and
a water suction pipe (32) that extends from a bottom portion of the reservoir (30) into the outlet pipe (28) and that has a first opening in the outlet pipe (28), the first opening being suitable to be located upstream of a throttle valve in a flow direction of intake gas, **characterized in that**
a bottom wall (34) of the reservoir (30) descends toward an end portion of the water suction pipe (32) on the reservoir (30) side,
a portion of the bottom wall (34) which is located in a vicinity of the end portion forms a lowermost portion (34a) of the bottom wall (34),
the low temperature-side tank (26) is vertically partitioned by a partition board (36) into an upper chamber (38) through which intake gas flows and the reservoir (30),
a water drop opening (40) through which condensed water on the partition board (36) is dropped into the reservoir (30) is provided to the partition board (36), at a lowermost portion of the partition board (36),
a baffle plate (44) is provided on an upper surface of the partition board (36),
the baffle plate (44) is arranged in such a manner as to reduce the speed at which condensed water flowing on the partition board (36) is drained to the outlet pipe (28) when the condensed water overflows onto the partition board (36), and
the upper chamber (38) has a cross-sectional area that is equal to or larger than a cross-sectional area of the outlet pipe (28), above the baffle plate (44).

2. The intake gas cooling device (10) for the supercharging internal combustion engine according to claim 1, wherein
the first opening is oriented in a direction perpendicular to the flow direction of the intake gas or in a direction downstream in the flow direction of the intake gas from the direction perpendicular to the flow direction of the intake gas.

3. The intake gas cooling device (10) for the supercharging internal combustion engine according to claim 1 or 2, wherein
a difference in height between a position of the first opening and a position of an end portion of the water suction pipe (32) on the reservoir (30) side is set such that condensed water accumulated in the reservoir during idling rotation of the supercharging internal combustion engine can be sucked into the outlet pipe (28) due to a difference in pressure between both ends of the water suction pipe (32),
an inner diameter of the water suction pipe (32) is made constant along an entire length of the water suction pipe (32), and
the inner diameter is set such that condensed water is prevented from being sucked into the outlet pipe in such a large quantity at once when the engine is started that the engine would suffer a malfunction.

4. The intake gas cooling device (10) for the supercharging internal combustion engine according to claim 1, wherein
the low temperature-side tank (26) is configured as a container that opens upward and that comprises the bottom wall (34) and lateral walls, the partition board (36) extends along opposed lateral walls that are opposed to each other in the direction perpendicular to the flow direction of the intake gas and that extend in the flow direction of the intake gas, and
the opposed lateral walls are coupled to the partition board (36).

5. The intake gas cooling device (10) for the supercharging internal combustion engine according to claim 4, wherein
the partition board (36) has an upstream-side portion and a downstream-side portion in the flow direction of the intake gas,
the partition board (36) is formed in such a shape as to descend from the upstream-side portion toward the downstream-side portion,
the water drop opening (40) is provided through the downstream-side portion of the partition board (36), and
the upstream-side portion of the partition board (36) forms, on a lower surface side of the upstream-side portion, a space (42) for absorbing an increase in volume when the condensed water accumulated in the reservoir (30) freezes while blocking the water drop opening (40).

6. The intake gas cooling device (10) for the supercharging internal combustion engine according to claim 1, wherein
a plurality of the baffle plates (44) are provided,
second openings (46) through which water on the partition board (36) can pass are provided through the baffle plates (44) respectively, and
at least one of the second openings (46) is offset from a same straight line so as to prevent all the second openings (46) from being located on the same straight line.

7. The intake gas cooling device (10) for the supercharging internal combustion engine according to claim 1, wherein
the baffle plates (44) are provided in such a manner as to be inclined diagonally upstream or diagonally downstream from the second openings (46) .

8. The intake gas cooling device (10) for the supercharging internal combustion engine according to claim 1, wherein
the water suction pipe (32) penetrates the partition board (36) from inside the reservoir (30), extends to the upper chamber (38), bends in the upper chamber (38), protrudes into the outlet pipe (28) from inside the upper chamber (38), and opens into the outlet pipe (28).

9. The intake gas cooling device (10) for the supercharging internal combustion engine according to claim 8, wherein
a lower end of the water suction pipe (32) is diagonally cut with respect to the bottom wall (34).

10. The intake gas cooling device (10) for the supercharging internal combustion engine according to any one of claims 1 to 7, wherein
the water suction pipe (32) once exits the low temperature-side tank (26), and couples an interior of the reservoir (30) and an interior of the outlet pipe (28) to each other.

11. The intake gas cooling device (10) for the supercharging internal combustion engine according to claim 1, wherein
the outlet pipe (28) is provided with a cross-sectional area reduction portion (28a) that is gradually reduced in cross-sectional area in the flow direction of the intake gas, a throat portion (28b) with a most reduced cross-sectional area, and a cross-sectional area increase portion (28c) that is gradually increased in cross-sectional area in the flow direction of the intake gas, in this order in the flow direction of the intake gas, and
the first opening is located at the throat portion (28b).

12. The intake gas cooling device (10) for the supercharging internal combustion engine according to claim 11, wherein
the water suction pipe (32) extends from the reservoir (30) to the upper chamber (38) in the low temperature-side tank (26), and protrudes from inside the low temperature-side tank (26) into the outlet pipe (28) in the upper chamber (38), and
the first opening is located at a central portion of a cross-section of the outlet pipe (28) at the throat portion (28b).

13. The intake gas cooling device (10) for the supercharging internal combustion engine according to claim 11, wherein
the water suction pipe (32) once exits the low temperature-side tank (26) and couples an interior of the reservoir (30) and an interior of the outlet pipe (28) to each other,
the water suction pipe (32) is connected to a hole (32d) that is provided through a wall of the outlet pipe (28), and
an end of an opening of the hole (32d) to which the water suction pipe (32) is connected to the outlet pipe (28) is located on an inner peripheral surface of the outlet pipe (28) at the throat portion (28b).

14. The intake gas cooling device (10) for the supercharging internal combustion engine according to any one of claims 1 to 7, wherein
the intercooler (20) is equipped with a down flow-type core through which the intake gas flows downward, or a cross flow-type core through which the intake gas flows laterally,
the outlet pipe (28) is provided at a vertically intermediate portion or an upper end portion of the low temperature-side tank (26),
a field that is located below the outlet pipe (28) in the low temperature-side tank (26) constitutes the reservoir (30), and
the water suction pipe (32) extends from the bottom portion of the reservoir (30) to such a position as to open into the outlet pipe (28).

## Patentansprüche

1. Einlassgaskühlvorrichtung (10) für eine interne aufgeladene Brennkraftmaschine, wobei die Einlassgaskühlvorrichtung (10):
einen Zwischenkühler (20), der in einem Einlassgaskanal bereitgestellt ist, wobei der Zwischenkühler (20) einen niedertemperaturseitigen Tank (26) aufweist, und der niedertemperaturseitige Tank (26) mit einem Reservoir (30) ausgestattet ist, das an einem unteren Abschnitt des niedertemperaturseitigen Tanks (26) zum vorübergehenden Akkumulieren von kondensierten Wasser bereitgestellt ist;
ein Auslassrohr (28), das mit dem niedertemperaturseitigen Tank (26) verbunden ist; und
ein Wassersaugrohr (32) aufweist, das sich von einem Bodenabschnitt des Reservoirs (30) ins Auslassrohr (28) erstreckt und das eine erste Öffnung in dem Auslassrohr (28) hat, wobei die erste Öffnung dazu geeignet ist, stromaufwärts von einem Drosselventil in einer Fließrichtung vom Einlassgas angeordnet zu sein, **dadurch gekennzeichnet, dass**
eine Bodenwand (34) des Reservoirs (30) in Richtung eines Endabschnitts des Wassersaugrohrs (32) auf der Seite des Reservoirs (30) absteigt,
ein Abschnitt der Bodenwand (34), der in einer Nähe des Endabschnitts angeordnet ist, einen untersten Abschnitt (34a) der Bodenwand (34) bildet,
der niedertemperaturseitige Tank (26) von einer Teilungsplatte (36) vertikal in eine obere Kammer (38), durch die Einlassgas fließt, und das Reservoir (30) unterteilt ist,
eine Wassertropföffnung (40), durch die kondensiertes Wasser auf der Teilungsplatte (36) ins Reservoir (30) tropft, an einem untersten Abschnitt der Teilungsplatte (36) bei der Teilungsplatte (36) vorgesehen ist,
eine Trennplatte (44) auf einer oberen Oberfläche der Teilungsplatte (36) bereitgestellt ist,
die Trennplatte (44) in einer solchen Weise angeordnet ist, dass sie die Geschwindigkeit reduziert, mit der auf der Teilungsplatte (36) fließendes kondensiertes Wasser zum Auslassrohr (28) abgeleitet ist, wenn das kondensierte Wasser auf die Teilungsplatte (36) überfließt, und
die obere Kammer (38) eine Querschnittsfläche oberhalb der Trennplatte (44) aufweist, die gleich oder größer als eine Querschnittsfläche des Auslassrohrs (28) ist.

2. Einlassgaskühlvorrichtung (10) für die interne aufgeladene Brennkraftmaschine nach Anspruch 1, wobei
die erste Öffnung in einer zur Fließrichtung des Einlassgasas senkrechten Richtung oder in einer Richtung strömungsabwärts in der Fließrichtung des Einlassgases von der zur Fließrichtung des Einlassgases senkrechten Richtung orientiert ist.

3. Einlassgaskühlvorrichtung (10) für die interne aufgeladene Brennkraftmaschine nach Anspruch 1 oder 2, wobei
eine Höhendifferenz zwischen einer Position der ersten Öffnung und einer Position eines Endabschnitts des Wassersaugrohrs (32) auf der Seite des Reservoirs (30) so gesetzt ist, dass im Reservoir angehäuftes kondensiertes Wasser während eines Leerlaufbetriebs der interne aufgeladenen Brennkraftmaschine aufgrund einer Druckdifferenz zwischen beiden Enden des Wassersaugrohrs (32) ins Auslassrohr (28) eingesaugt werden kann,
ein Innendurchmesser des Wassersaugrohrs (32) entlang eine gesamte Länge des Wassersaugrohrs (32) konstant ausgebildet ist, und
der Innendurchmesser so gesetzt ist, dass kondensiertes Wasser daran gehindert ist, sofort bei Motorstart in einer solchen großen Menge ins Auslassrohr eingesaugt zu werden, dass der Motor an einer Fehlfunktion leidet.

4. Einlassgaskühlvorrichtung (10) für die interne aufgeladene Brennkraftmaschine nach Anspruch 1, wobei
der niedertemperaturseitige Tank (26) als ein Behälter ausgebildet ist, der sich nach oben öffnet und die Bodenwand (34) und Seitenwände aufweist,
die Teilungsplatte (36) sich entlang gegenüberliegende Seitenwände erstreckt, die in der zur Fließrichtung des Einlassgases senkrechten Richtung zueinander gegenüberliegen und sich in der Fließrichtung des Einlassgases erstrecken, und
die gegenüberliegenden Seitenwände mit der Teilungsplatte (36) gekoppelt sind.

5. Einlassgaskühlvorrichtung (10) für die interne aufgeladene Brennkraftmaschine nach Anspruch 4, wobei
die Teilungsplatte (36) einen stromaufwärtsseitigen Abschnitt und einen stromabwärtsseitigen Abschnitt in der Fließrichtung des Einlassgases aufweist,
die Teilungsplatte (36) in einer derartigen Form gebildet ist, dass sie vom stromaufwärtsseitigen Abschnitt in Richtung des stromabwärtsseitigen Abschnitts absteigt,
die Wassertropföffnung (40) hindurch des stromabwärtsseitigen Abschnitts der Teilungsplatte (36) bereitgestellt ist, und
der stromaufwärtsseitige Abschnitt der Teilungsplatte (36) einen Raum (42) auf einer unteren Oberfläche des stromaufwärtsseitigen Abschnitts zum Absorbieren einer Volumenerhöhung bildet, wenn das im Reservoir (30) angehäufte kondensierte Wasser (30) gefriert, derweil es die Wassertropföffnung (40) blockiert.

6. Einlassgaskühlvorrichtung (10) für die interne aufgeladene Brennkraftmaschine nach Anspruch 1, wobei
eine Vielzahl der Trennplatten (44) bereitgestellt sind,
zweite Öffnungen (46), durch die Wasser auf der Trennplatte (36) laufen kann, jeweils durch die Trennplatten (44) bereitgestellt sind, und
zumindest eine der zweiten Öffnungen (46) von einer gleichen geraden Linie so versetzt angeordnet ist, um zu verhindern, dass die sämtlichen zweiten Öffnungen (46) auf derselben geraden Linie angeordnet sind.

7. Einlassgaskühlvorrichtung (10) für die interne aufgeladene Brennkraftmaschine nach Anspruch 1, wobei
die Trennplatten (44) in einer solchen Weise bereitgestellt sind, dass sie von den zweiten Öffnungen (46) diagonal stromaufwärts oder diagonal stromabwärts geneigt sind.

8. Einlassgaskühlvorrichtung (10) für die interne aufgeladene Brennkraftmaschine nach Anspruch 1, wobei
das Wassersaugrohr (32) die Teilungsplatte (36) von innerhalb des Reservoirs (30) durchdringt, sich zur oberen Kammer (38) erstreckt, sich in der oberen Kammer (38) biegt, von innerhalb der oberen Kammer (28) ins Auslassrohr (28) ragt, und sich ins Auslassrohr (28) öffnet.

9. Einlassgaskühlvorrichtung (10) für die interne aufgeladene Brennkraftmaschine nach Anspruch 8, wobei
ein unteres Ende des Wassersaugrohrs (32) in Bezug auf die Bodenwand (34) diagonal geschnitten ist.

10. Einlassgaskühlvorrichtung (10) für die interne aufgeladene Brennkraftmaschine nach einem der Ansprüche 1 bis 7, wobei
das Wassersaugrohr (32) ein Inneres des Reservoirs (30) und ein Inneres des Auslassrohrs (28) miteinander verbindet, wenn das Wassersaugrohr (32) den niedertemperaturseitigen Tank (26) verlässt.

11. Einlassgaskühlvorrichtung (10) für die interne aufgeladene Brennkraftmaschine nach Anspruch 1, wobei
das Auslassrohr (28) mit einem Querschnittfläche-Verringerungsabschnitt (28a), der in der Querschnittfläche in der Fließrichtung des Einlassgases allmählich verringert ist, einem Verengungsabschnitt (28b) mit einer am meisten verringerten Querschnittfläche, und einem Querschnittfläche-Vergrößerungsabschnitt (28c), der in Querschnittfläche in der Fließrichtung des Einlassgases allmählich vergrößert ist, in dieser Reihenfolge in der Fließrichtung des Einlassgases vorgesehen ist, und
die erste Öffnung am Verengungsabschnitt (28b) angeordnet ist.

12. Einlassgaskühlvorrichtung (10) für die interne aufgeladene Brennkraftmaschine nach Anspruch 11, wobei
das Wassersaugrohr (32) sich vom Reservoir (30) zur oberen Kammer (38) im niedertemperaturseitigen Tank (26) erstreckt und von innerhalb des niedertemperaturseitigen Tanks (26) ins Auslaufrohr (28) in der oberen Kammer (38) ragt, und
die erste Öffnung an einem Mittelabschnitt eines Querschnitts des Auslassrohrs (28) am Verengungsabschnitt (28b) angeordnet ist.

13. Einlassgaskühlvorrichtung (10) für die interne aufgeladene Brennkraftmaschine nach Anspruch 11, wobei
das Wassersaugrohr (32) ein Inneres des Reservoirs (30) und ein Inneres des Auslassrohrs (28) miteinander verbindet, wenn das Wassersaugrohr (32) den niedertemperaturseitigen Tank (26) verlässt,
das Wassersaugrohr (32) mit einem Loch (32d) verbunden ist, welches hindurch einer Wand des Auslassrohrs (28) vorgesehen ist, und
ein Ende einer Öffnung des Lochs (32d), über das das Wassersaugrohr (32) mit dem Auslassrohr (28) verbunden ist, auf einer Innenumfangsoberfläche des Auslassrohrs (28) am Verengungsabschnitt (28b) angeordnet ist.

14. Einlassgaskühlvorrichtung (10) für die interne aufgeladene Brennkraftmaschine nach einem der Ansprüche 1 bis 7, wobei
der Zwischenkühler (20) mit einem abwärtsstromartigen Kern, durch den das Einlassgas nach unten fließt, oder mit einem querstromartigen Kern, durch den das Einlassgas seitlich fließt, ausgestattet ist,
das Auslassrohr (28) an einem vertikalen Zwischenabschnitt oder einem oberen Endabschnitt des niedertemperaturseitigen Tanks (26) bereitgestellt ist,
ein Bereich, das unterhalb des Auslassrohrs (28) im niedertemperaturseitigen Tank (26) angeordnet ist, das Reservoir (30) bildet, und
das Wassersaugrohr (32) sich vom Bodenabschnitt des Reservoirs (30) zu einer solchen Position erstreckt, dass es sich ins Auslassrohr (28) öffnet.

## Revendications

1. Dispositif de refroidissement de gaz d'admission (10) pour un moteur à combustion interne suralimenté, le dispositif de refroidissement de gaz d'admission (10) comprenant :
un refroidisseur intermédiaire (20) qui est placé dans un passage de gaz d'admission, le refroidisseur intermédiaire (20) ayant un réservoir côté basse température (26), et le réservoir côté basse température (26) étant équipé d'un réservoir (30) qui est placé dans une partie inférieure du réservoir côté basse température (26) pour accumuler temporairement de l'eau condensée ;
un tuyau de sortie (28) qui est connecté au réservoir côté basse température (26) ; et
un tuyau d'aspiration d'eau (32) qui s'étend depuis une partie inférieure du réservoir (30) dans le tuyau de sortie (28) et qui comporte une première ouverture dans le tuyau de sortie (28), la première ouverture convenant pour être située en aval d'une vanne des gaz dans une direction d'écoulement du gaz d'admission, **caractérisé en ce que**
une paroi inférieure (34) du réservoir (30) descend vers une partie d'extrémité du tuyau d'aspiration d'eau (32) sur le côté du réservoir (30),
une partie de la paroi inférieure (34) qui est située dans un voisinage de la partie d'extrémité forme une partie la plus basse (34a) de la paroi inférieure (34),
le réservoir côté basse température (26) est séparé verticalement par une paroi de séparation (36) en une chambre supérieure (38) à travers laquelle le gaz d'admission s'écoule et le réservoir (30),
une ouverture d'égouttement d'eau (40) à travers laquelle de l'eau condensée sur la paroi de séparation (36) goutte dans le réservoir (30) est pratiquée sur la paroi de séparation (36), au niveau d'une partie la plus basse de la paroi de séparation (36),
une plaque de chicane (44) est placée sur une surface supérieure de la paroi de séparation (36),
la plaque de chicane (44) est agencée de façon à réduire la vitesse à laquelle l'eau condensée s'écoulant sur la paroi de séparation (36) est drainée vers le tuyau de sortie (28) quand l'eau condensée s'écoule sur la paroi de séparation (36), et
la chambre supérieure (38) a une aire en section transversale qui est supérieure ou égale à une aire en section transversale du tuyau de sortie (28), au-dessus de la plaque de chicane (44).

2. Dispositif de refroidissement de gaz d'admission (10) pour le moteur à combustion interne suralimenté selon la revendication 1, dans lequel
la première ouverture est orientée dans une direction perpendiculaire à la direction d'écoulement du gaz d'admission ou dans une direction aval dans la direction d'écoulement du gaz d'admission depuis la direction perpendiculaire à la direction d'écoulement du gaz d'admission.

3. Dispositif de refroidissement de gaz d'admission (10) pour le moteur à combustion interne suralimenté selon la revendication 1 ou 2, dans lequel
une différence en hauteur entre une position de la première ouverture et une position d'une partie d'extrémité du tuyau d'aspiration d'eau (32) sur le côté réservoir (30) est réglée de telle manière que l'eau condensée accumulée dans le réservoir pendant la rotation au ralenti du moteur à combustion interne suralimenté peut être aspirée dans le tuyau de sortie (28) du fait d'une différence de pression entre les deux extrémités du tuyau d'aspiration d'eau (32),
un diamètre intérieur du tuyau d'aspiration d'eau (32) est rendu constant sur une longueur entière du tuyau d'aspiration d'eau (32), et
le diamètre intérieur est réglé de telle manière que l'eau condensée est empêchée d'être aspirée dans le tuyau de sortie dans une telle grande quantité en même temps quand le moteur est démarré que le moteur souffrirait de dysfonctionnement.

4. Dispositif de refroidissement de gaz d'admission (10) pour le moteur à combustion interne suralimenté selon la revendication 1, dans lequel
le réservoir côté basse température (26) est configuré comme un réservoir qui s'ouvre vers le haut et qui comprend la paroi inférieure (34) et des parois latérales,
la paroi de séparation (36) s'étend le long de parois latérales opposées qui sont opposées l'une à l'autre dans la direction perpendiculaire à la direction d'écoulement du gaz d'admission et qui s'étendent dans la direction d'écoulement du gaz d'admission, et
les parois latérales opposées sont couplées à la paroi de séparation (36).

5. Dispositif de refroidissement de gaz d'admission (10) pour le moteur à combustion interne suralimenté selon la revendication 4, dans lequel
la paroi de séparation (36) comporte une partie côté amont et une partie côté aval dans la direction d'écoulement du gaz d'admission,
la paroi de séparation (36) est formée dans une forme telle quelle descend depuis la partie côté amont vers la partie côté aval,
l'ouverture d'égouttement d'eau (40) est pratiquée à travers la partie côté aval de la paroi de séparation (36), et
la partie côté amont de la paroi de séparation (36) forme, sur un côté de surface inférieure de la partie côté amont, un espace (42) pour absorber une augmentation de volume quand l'eau condensée accumulée dans le réservoir (30) gèle en bloquant l'ouverture d'égouttement d'eau (40).

6. Dispositif de refroidissement de gaz d'admission (10) pour le moteur à combustion interne suralimenté selon la revendication 1, dans lequel
une pluralité de plaques de chicane (44) sont fournies,
des secondes ouvertures (46) à travers lesquelles de l'eau sur la paroi de séparation (36) peut passer sont pratiquées à travers les plaques de chicane (44) respectivement, et
au moins une des secondes ouvertures (46) est décalée d'une même ligne droite de façon à empêcher toutes les secondes ouvertures (46) d'être situées sur la même ligne droite.

7. Dispositif de refroidissement de gaz d'admission (10) pour le moteur à combustion interne suralimenté selon la revendication 1, dans lequel
les plaques de chicane (44) sont placées de façon à être inclinées diagonalement en amont ou diagonalement en aval des secondes ouvertures (46).

8. Dispositif de refroidissement de gaz d'admission (10) pour le moteur à combustion interne suralimenté selon la revendication 1, dans lequel
le tuyau d'aspiration d'eau (32) pénètre la paroi de séparation (36) depuis l'intérieur du réservoir (30), s'étend vers la chambre supérieure (38), se courbe dans la chambre supérieure (38), fait saillie dans le tuyau de sortie (28) depuis l'intérieur de la chambre supérieure (38), et s'ouvre dans le tuyau de sortie (28).

9. Dispositif de refroidissement de gaz d'admission (10) pour le moteur à combustion interne suralimenté selon la revendication 8, dans lequel
une extrémité inférieure du tuyau d'aspiration d'eau (32) est coupée diagonalement par rapport à la paroi inférieure (34).

10. Dispositif de refroidissement de gaz d'admission (10) pour le moteur à combustion interne suralimenté selon l'une quelconque des revendications 1 à 7, dans lequel
le tuyau d'aspiration d'eau (32) sort du réservoir côté basse température (26), et couple un intérieur du réservoir (30) et un intérieur du tuyau de sortie (28) ensemble.

11. Dispositif de refroidissement de gaz d'admission (10) pour le moteur à combustion interne suralimenté selon la revendication 1, dans lequel
le tuyau de sortie (28) est pourvu d'une partie de réduction d'aire en section transversale (28a) qui est réduite progressivement en aire en section transversale dans la direction d'écoulement du gaz d'admission, une partie d'étranglement (28b) avec une aire en section transversale la plus réduite, et une partie d'augmentation d'aire en section transversale (28c) qui est augmentée progressivement en aire en section transversale dans la direction d'écoulement du gaz d'admission, dans cet ordre dans la direction d'écoulement du gaz d'admission, et
la première ouverture est située au niveau de la partie d'étranglement (28b).

12. Dispositif de refroidissement de gaz d'admission (10) pour le moteur à combustion interne suralimenté selon la revendication 11, dans lequel
le tuyau d'aspiration d'eau (32) s'étend depuis le réservoir (30) jusqu'à la chambre supérieure (38) dans le réservoir côté basse température (26), et fait saillie depuis l'intérieur du réservoir côté basse température (26) dans le tuyau de sortie (28) dans la chambre supérieure (38), et
la première ouverture est située en une partie centrale d'une section transversale du tuyau de sortie (28) au niveau de la partie d'étranglement (28b).

13. Dispositif de refroidissement de gaz d'admission (10) pour le moteur à combustion interne suralimenté selon la revendication 11, dans lequel
le tuyau d'aspiration d'eau (32) sort du réservoir côté basse température (26) et couple un intérieur du réservoir (30) et un intérieur du tuyau de sortie (28) ensemble,
le tuyau d'aspiration d'eau (32) est connecté à un trou (32d) qui est pratiqué à travers une paroi du tuyau de sortie (28), et
une extrémité d'une ouverture du trou (32d) à laquelle le tuyau d'aspiration d'eau (32) est connecté au tuyau de sortie (28) est située sur une surface périphérique intérieure du tuyau de sortie (28) au niveau de la partie d'étranglement (28b).

14. Dispositif de refroidissement de gaz d'admission (10) pour le moteur à combustion interne suralimenté selon l'une quelconque des revendications 1 à 7, dans lequel
le refroidisseur intermédiaire (20) est équipé d'un coeur du type à flux descendant à travers lequel le gaz d'admission s'écoule vers le bas, ou d'un coeur du type à flux croisés à travers lequel le gaz d'admission s'écoule latéralement,
le tuyau de sortie (28) est placé en une partie verticalement intermédiaire ou une partie d'extrémité supérieure du réservoir côté basse température (26),
un champ qui est situé sous le tuyau de sortie (28) dans le réservoir côté basse température (26) constitué le réservoir (30), et
le tuyau d'aspiration d'eau (32) s'étend depuis la partie inférieure du réservoir (30) jusqu'à une position telle qu'il s'ouvre dans le tuyau de sortie (28).
